# EUROPEAN PATENT APPLICATION

(11) **EP 4 635 829 A1**
(43) Date of publication of application: **22.10.2025**
(21) Application number: 24170411.3
(22) Date of filing: 16.04.2024
(51) Int. Cl.: B62D 33/063, B62D 35/00, B62D 33/06

(54) **A WIND FORCE ADJUSTABLE PANHARD BAR**

(71) Applicant: VOLVO TRUCK CORPORATION, 405 08 Göteborg (SE)
(72) Inventor: GROMATZKY, Jonathan, KERNERSVILLE, 27284 (US)
(74) Representative: Kransell & Wennborg KB

(57) **Abstract**

The present disclosure relates to a computer system comprising processing circuitry configured to receive sensor data during propulsion of a vehicle, the sensor data comprising a first force value representing a first wind force acting on a first lateral side of a vehicle cab, and a second force value representing a second wind force acting on a second lateral side of the vehicle cab, determine a difference between the first force value and the second force value, and control an actuator to adjust a length of an adjustable panhard bar connected between the vehicle cab and a chassis of the vehicle to rotate the vehicle cab, around a geometric axis of the vehicle, in response to the determined difference between the first and second force values to reduce a wind force resistance of the vehicle cab caused by the first and second wind forces.

## Description

### TECHNICAL FIELD

The disclosure relates generally to panhard bars and its connection between a vehicle cab and a chassis of the vehicle. In particular aspects, the disclosure relates to a wind force adjustable panhard bar. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Energy consumption is one key issue for the development of vehicles. In particular, a reduced energy consumption reduces environmentally harmful exhaust gases for vehicles propelled by internal combustion engines. A reduced energy consumption also increases the operating range for vehicle propelled by internal combustion engines as well as for vehicles propelled by electric traction motors.

A parameter affecting the energy consumption is the wind force resistance acting on the vehicle cab during driving. In order to reduce the wind force resistance for a truck, wind deflectors are conventionally arranged on the roof of the vehicle cab. However, the wind also hits the lateral sides of the vehicle cab and thereby causing a non-neglectable wind force resistance and increased energy consumption for the vehicle. There is thus a desire to further reduce the wind force resistance acting on the vehicle cab during operation.

### SUMMARY

According to a first aspect of the disclosure, there is provided a computer system comprising processing circuitry configured to receive sensor data during propulsion of a vehicle, the sensor data comprising a first force value representing a first wind force acting on a first lateral side of a vehicle cab, and a second force value representing a second wind force acting on a second lateral side of the vehicle cab, determine a difference between the first force value and the second force value, and control an actuator to adjust a length of an adjustable panhard bar connected between the vehicle cab and a chassis of the vehicle to rotate the vehicle cab, around a geometric axis of the vehicle, in response to the determined difference between the first and second force values to reduce a wind force resistance of the vehicle cab caused by the first and second wind forces.

The first aspect of the disclosure may seek to reduce wind force resistance acting on the vehicle cab during propulsion of the vehicle. A technical benefit may include that by adjusting the length of the adjustable panhard bar, the vehicle cab can be rotated to at least partly reduce the wind force resistance. Accordingly, the disclosure may advantageously reduce the wind force resistance acting on the lateral sides of the vehicle cab by receiving sensor data of the wind forces acting on the vehicle cab. The sensor data may comprise data indicating the magnitude of the first and second wind force values.

Optionally in some examples, including in at least one preferred example, the processing circuitry is configured to determine a resulting wind direction acting on the vehicle cab, the resulting wind direction being a difference between the first force value acting on the first lateral side of the vehicle cab and the second force value acting on the second lateral side of the vehicle cab, and control the actuator to adjust the length of the adjustable panhard bar such that the vehicle cab is rotated in a direction towards the resulting wind direction.

A technical benefit may include that even further details of the wind forces acting on the vehicle cab can be received to determine how the adjustable panhard bar should be adjusted in length to rotate the vehicle cab relative to the chassis. In particular, the sensor data may advantageously comprise information of the direction of the wind acting on the lateral sides of the vehicle cab. Thus, the first force value may comprises first force vector defining the direction and magnitude of the first force acting on the first lateral side of the vehicle cab, and the second force value may comprises second force vector defining the direction and magnitude of the second force acting on the second lateral side of the vehicle cab.

Optionally in some examples, including in at least one preferred example, the processing circuitry is configured to control the actuator to adjust the length of the adjustable panhard bar proportionally to the difference between the first and second force values.

A technical benefit may include that the adjustable panhard bar can be controlled to optimize the rotation of the vehicle cab, i.e. to not rotate the vehicle cab excessively.

Optionally in some examples, including in at least one preferred example, the processing circuitry is configured to control the actuator to adjust the length of the adjustable panhard bar when the difference between the first and second force values exceeds a predetermined threshold force value.

A technical benefit may include that the wind force resistance should preferably negatively affect the energy consumption of the vehicle for controlling the actuator to adjust the length of the adjustable panhard bar. Hence, the length of the adjustable panhard bar is here only adjusted when the processing circuitry determines that a rotation of the vehicle cab causes a reduction in energy consumption, thereby prolonging the operational lifetime of e.g. the actuator and the adjustable panhard bar.

Optionally in some examples, including in at least one preferred example, the processing circuitry is configured to control the actuator to adjust the length of the adjustable panhard bar when the vehicle is propelled at a vehicle speed above a predetermined threshold speed limit.

A technical benefit may include that the wind force resistance negatively affects the energy consumption when the vehicle speed is relatively high. Accordingly, the operational lifetime of components involved in the rotation of the vehicle cab can be prolonged.

Optionally in some examples, including in at least one preferred example, the sensor data is received from a first wind sensor arranged on the first lateral side of the vehicle cab and from a second wind sensor arranged on the second lateral side of the vehicle cab. A technical benefit may include that an improved detection of yaw wind may be obtained.

Optionally in some examples, including in at least one preferred example, the first sensor is arranged on a first vehicle cab extender and the second sensor is arranged on a second vehicle cab extender, the first and second vehicle cab extenders are positioned at a rear end of the vehicle cab at a respective first and second lateral side. A technical benefit may include that the vehicle cab extenders are arranged close to a trailer unit, which improves the detection of the wind close to such trailer unit, whereby the vehicle cab can be rotated in a suitable manner.

According to a second aspect, there is provided a vehicle comprising the computer system of any of the examples described above in relation to the first aspect.

According to a third aspect, there is provided a computer-implemented method, comprising determining, by processing circuitry of a computer system, a first wind force value representing a first wind force acting on a first lateral side of a vehicle cab, and a second force value representing a second wind force acting on a second lateral side of the vehicle cab, determining, by the processing circuitry, a difference between the first force value and the second force value, and controlling, by the processing circuitry, an actuator to adjust a length of an adjustable panhard bar connected between the vehicle cab and a chassis of the vehicle to rotate the vehicle cab, around a geometric axis of the vehicle, in response to the determined difference between the first and second force values to reduce a wind force resistance of the vehicle cab caused by the first and second wind forces.

Effects and features of the second and third aspects are largely analogous to those described above in relation to the first aspect. Any feature described in relation to the first aspect should be construed as also being combinable with the features described in relation to the second and third aspects.

According to a fourth aspect, there is provided a controllable cab adjustment system for a vehicle, the controllable cab adjustment system comprising an adjustable panhard bar connectable between a chassis of the vehicle and a vehicle cab, an actuator connected to the adjustable panhard bar and arranged to controllably adjust a length of the adjustable panhard bar, a first wind sensor and a second wind sensor, a pivotable connection joint configured to rotate the vehicle cab relative to the chassis around a geometric axis of the vehicle, and processing circuitry coupled to the actuator and to the first and second wind sensors, the processing circuitry being configured to: receive sensor data from the first and second wind sensors during propulsion of the vehicle, the sensor data from the first wind sensor comprising a first force value representing a first wind force acting on a first lateral side of the vehicle cab, and the data from the second wind sensor comprising a second force value representing a second wind force acting on a second lateral side of the vehicle cab, determine a difference between the first and second force values, and control the actuator to adjust the length of the panhard bar to rotate the vehicle cab at the pivotable connection joint in response to the determined difference between the first and second force values to reduce a wind force resistance of the vehicle cab caused by the first and second wind forces.

Optionally in some examples, including in at least one preferred example, the vehicle cab is suspended to the vehicle frame at a pivotable connection joint allowing the vehicle cab to rotate. A technical benefit may include that the vehicle cab may be rotated in a desired manner.

Optionally in some examples, including in at least one preferred example, the pivotable connection joint is positioned at a front end of the vehicle cab. A technical benefit may include that the vehicle cab can be rotated in a manner that may not substantially negatively affect the operator.

Optionally in some examples, including in at least one preferred example, the vehicle cab is suspended to the chassis by a pair of elastic connector elements allowing a translative motion of the vehicle cab relative to the chassis. A technical benefit may include that the pair of elastic connector elements may serve the dual purpose of suspending the vehicle cab as well as allowing the translative motion.

Optionally in some examples, including in at least one preferred example, the pair of elastic connector elements being a pair of air bellows. The air bellows may advantageously reduce vibrations between the chassis and the vehicle cab and can advantageously move in a direction parallel to the chassis to allow for the rotation of the vehicle cab.

Optionally in some examples, including in at least one preferred example, the pair of elastic connector elements is positioned at a rear end of the vehicle cab. A technical benefit may include that the suspension and load absorbing abilities may be improved.

Optionally in some examples, including in at least one preferred example, the panhard bar is arranged at a rear end of the vehicle cab. A technical benefit may include that the vehicle cab can be rotated in a manner that may not substantially negatively affect the operator.

Optionally in some examples, including in at least one preferred example, the actuator is an electric motor. The actuator may alternatively be a pneumatically or hydraulically controlled cylinder, etc. A technical benefit may include that the electric motor can be controlled in a simple and rapid manner. Hence, the electric motor may be highly responsive to instructions transmitted from the processing circuitry.

Further effects and features of the fourth aspect are largely analogous to those described above in relation to the first aspect. Any feature described in relation to the first aspect should hence be construed as also being combinable with the features described in relation to the fourth aspect.

According to a fifth aspect, there is provided a computer program product comprising program code for performing, when executed by the processing circuitry, the method of the third aspect.

According to a sixth aspect, there is provided a non-transitory computer-readable storage medium comprising instructions, which when executed by the processing circuitry, cause the processing circuitry to perform the method of the third aspect.

Effects and features of the fifth and sixth aspects are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of the suspension of the cab to the chassis according to an example,
Fig. 3 is an exemplary illustration of the cab rotating relative to the chassis according to an example,
Fig. 4 is an exemplary flow chart of a method according to an example, and
Fig. 5 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The following disclosure will describe a system and a method that aims at reducing the wind force resistance acting on a vehicle cab during vehicle propulsion. By reducing the wind force resistance, a technical advantage may be that the energy consumption for the vehicle can be reduced.

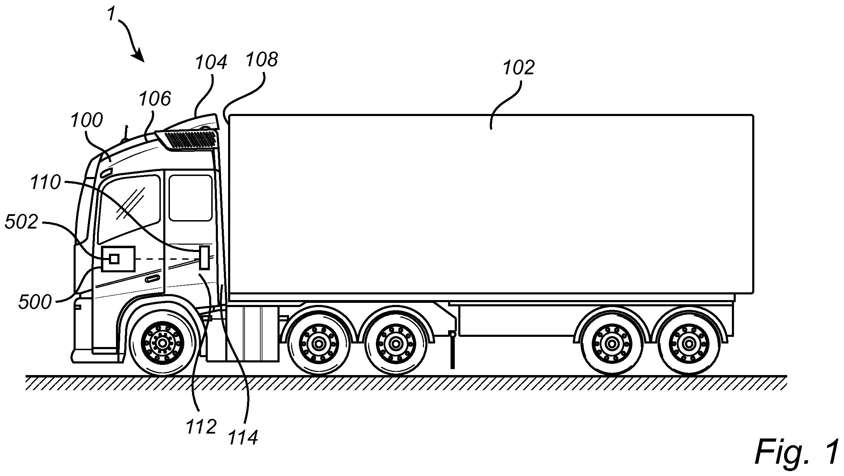

With reference to Fig. 1, a vehicle 1 according to an example is depicted. The vehicle 1 is propelled by a prime mover arrangement (not shown). The prime mover arrangement may comprise an internal combustion engine, an electric traction motor, or a combination of an internal combustion engine and an electric traction motor, also commonly referred to as a hybrid system. As an alternative, the vehicle 1 may additionally comprise a fuel cell arranged to generate electric energy. The electric energy generated by the fuel cell can be fed to the electric traction motor, or to an energy storage system.

The vehicle 1 further comprises a vehicle cab 100 and a trailer unit 102 arranged behind the vehicle cab 100 as seen in a longitudinal direction of the vehicle 1. The vehicle cab 100 comprises a wind deflector 104 on the roof 106 of the vehicle cab 100. The wind deflector 104 may advantageously improve the aerodynamic properties for the vehicle as it can cause the head-on wind to flow "over" the trailer unit. Without a wind deflector, the head-on wind may hit a portion of the relatively large front 108 of the trailer unit 102 which may cause a relatively high wind force resistance acting on the vehicle 1. In particular, for some vehicles 1, such as the one depicted in the exemplified Fig. 1, the height of the trailer unit 102 is larger than the height of the vehicle cab 100. Hereby, without the presence of a wind deflector 104 on the roof 106, the head-on wind may hit the upper portion of the front 108 of the trailer unit 102 during propulsion of the vehicle 1 causing a relatively high wind force resistance.

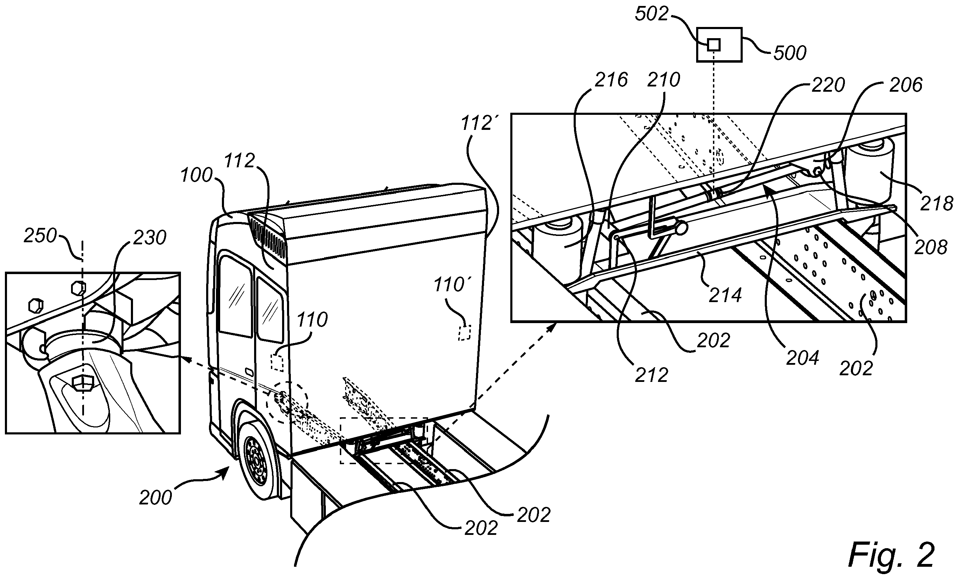

The vehicle 1 may further comprise a first wind sensor 110 arranged on a first lateral side 112 of the vehicle cab 100. The first wind sensor 110 may be arranged on a first vehicle cab extender 114 arranged on the vehicle cab 100. In particular, the first vehicle cab extender 114 is connected to the vehicle cab 100 at a rear end thereof and extends in a direction towards the trailer unit 102. As is further detailed in Fig. 2, the vehicle may also comprise a second wind sensor 110' arranged on a second lateral side 112' of the vehicle cab 100. The second wind sensor 110' may be arranged on a second vehicle cab extender arranged on the vehicle cab 100. In particular, and in a similar vein as the first vehicle cab extender 114, the second vehicle cab extender is connected to the vehicle cab 100 at a rear end thereof and extends in a direction towards the trailer unit 102. Accordingly, the first and second vehicle cab extenders are arranged on laterally opposite sides of the vehicle cab 100 at the rear end thereof. Each of the first and second wind sensors may be arranged to detect a force or pressure acting on the corresponding lateral sides of the vehicle cab 100. The first wind sensor 110 may thus be referred to as a first wind force sensor, and the second wind sensor 110' may be referred to as a second wind force sensor.

The first 110 and second 110' wind sensors may be arranged to detect a force or pressure acting on the respective lateral sides of the vehicle cab 100, which force/pressure is caused by the wind acting on the vehicle cab 100. The first and second wind sensor may each be arranged as a pressure sensor. The pressure sensors can be a calibrated pressure sensors, or differential pressure sensors. With reference to a calibrated pressure sensor, and according to a non-limiting example, this type of sensor may directly measure the atmospheric pressure. When wind blows against e.g. the first lateral side of the vehicle cab where the pressure sensor is positioned, this creates a pressure on this position of the vehicle cab 100. An increase in pressure can thus be detected by the pressure sensor to determine the wind force value. As mentioned, the pressure sensor may alternatively be a differential pressure sensors. In such a case, and according to a non-limiting example, the differential pressure sensor may measure the difference in pressure between two positions/points. When the wind blows against an object, it creates a pressure difference on e.g. the surface of the object. This pressure difference may be related to the force exerted by the wind on the object. A differential pressure sensor can be installed in a way that one side of the sensor is exposed to the wind, while the other side is shielded or protected from the wind. The pressure difference between these two positions is then measured by the sensor.

The first 110 and second 110' wind sensors may be arranged to detect a force magnitude of the wind acting on the respective first 112 and second 112' lateral sides of the vehicle cab 100. The first 110 and second 110' wind sensors may also be arranged to detect a wind direction of the wind acting on the respective first 112 and second 112' lateral sides of the vehicle cab 100. In particular, by strategically positioning the first 110 and second 110' wind sensors on the respective first 112 and second 112' lateral sides of the vehicle cab 100, the direction of the wind force acting on the vehicle cab 100 may be determined. When the wind blows against the vehicle cab 100, the wind creates a pressure gradient across the surface of the vehicle cab 100. The pressure on the lateral side facing the wind will be higher than on the opposite lateral side, due to the force exerted by the wind. By measuring the pressure differences across wind sensors, a sensor system comprising the first 110 and second 110' wind sensors can determine the direction from which the wind is coming. According to an example, the first wind sensor 110 may comprise an array of first wind sensors distributed across the first lateral side 112 of the vehicle cab 100. In a similar vein, surface of the second wind sensor 110' may comprise an array of second wind sensors distributed across the second lateral side 112' of the vehicle cab 100. The first 110 and second 110' wind sensors may be arranged on the same position on the first 112 and second 112' lateral sides. Thus, the first 110 and second 110' wind sensors are in such example arranged symmetrically opposite to each other and arranged on a same surface portion on the respective first 112 and second 112' lateral sides.

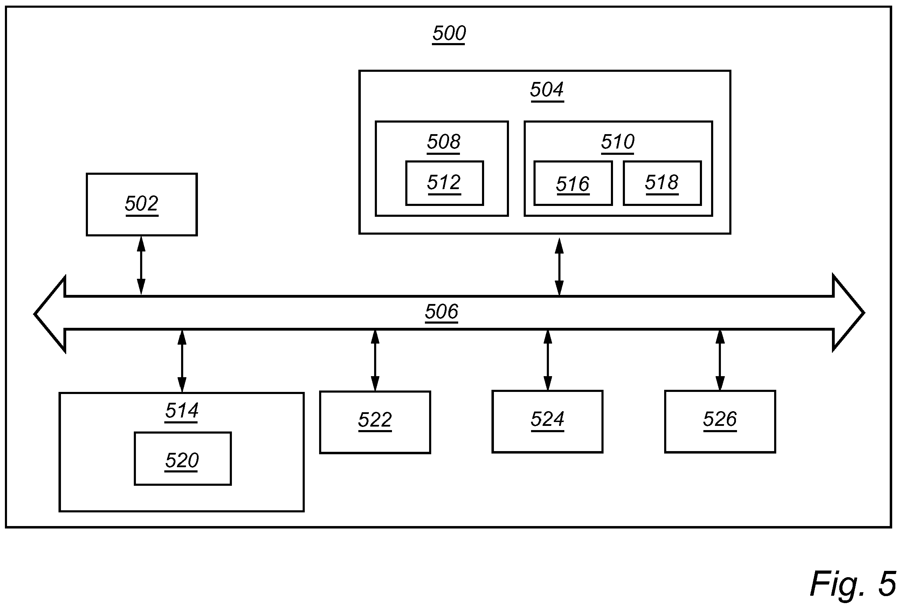

The vehicle also comprises a computer system 500. The computer system 500 comprises processing circuitry 502 to which the first 110 and second 110' wind sensors are preferably coupled to the processing circuitry 502. The computer system 500 and the processing circuitry 502 will be described in further detail below with reference to the description of Fig. 5.

As indicated above, the wind force resistance acting on the vehicle 1 may be reduced by using a wind deflector 104. However, the wind deflector 104 primarily only reduces the wind force resistance of the head-on wind acting on the vehicle 1. The following will describe a system that may also reduce wind force resistance caused by the wind acting on the lateral sides of the vehicle 1, i.e. wind acting on the vehicle cab at a yaw angle.

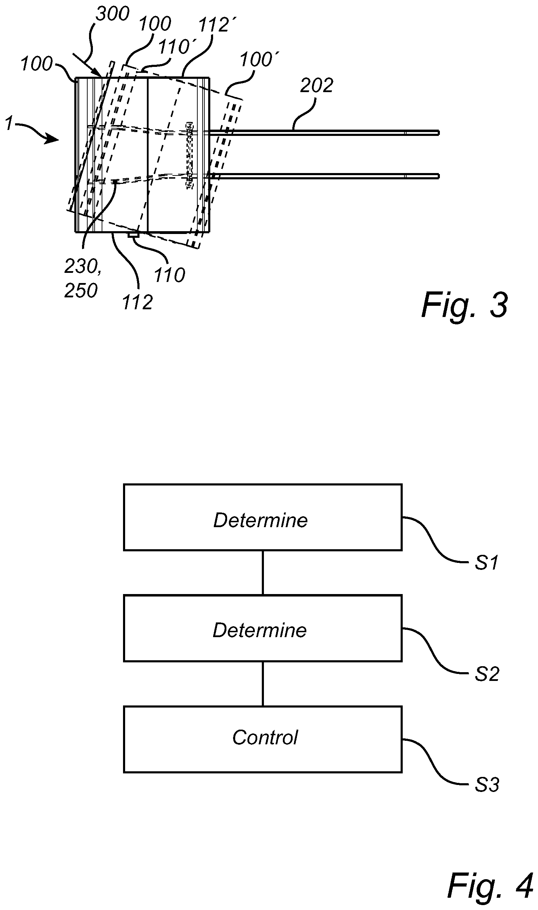

Reference is therefore now initially made to Fig. 2. Fig. 2 is an exemplary illustration of the suspension of the vehicle cab 100 to the chassis 202 according to an example. In particular, Fig. 2 depicts a controllable cab adjustment system 200 for the vehicle 1 according to an example. As can be seen in Fig. 2, the controllable cab adjustment system 200 comprises an adjustable panhard bar 204 which is connected between the vehicle cab 100 and the chassis 202. In particular, the adjustable panhard bar 204 is pivotably connected to the vehicle cab 100 at a first end 206 of the adjustable panhard bar 204. A first pivot joint 208 is thus arranged at the first end 206 of the adjustable panhard bar 204. The adjustable panhard bar 204 is also pivotably connected to the chassis 202 at a second end 210 of the adjustable panhard bar 204. A second pivot joint 212 is thus arranged at the second end 210 of the adjustable panhard bar 204. The second end 210 of the adjustable panhard bar 204 is further connected to a transversal beam 214, which transversal beam 214 in turn may be fixedly attached to the chassis 202. Further, the vehicle cab 100 is in the exemplified Fig. 3 suspended to the chassis 202 by a pair of elastic connector elements 216, 218. The adjustable panhard bar 204 as well as the pair of elastic connector elements 216, 218 are preferably arranged at a rear end of the vehicle cab 100. The elastic connector elements 216, 218, which may be a pair of air bellows, are preferably connected between the vehicle cab 100 and the chassis 202.

Furthermore, the system 200 comprises an actuator 220 connected to the adjustable panhard bar 204. The actuator 220 is arranged to adjust a length of the adjustable panhard bar 204. The adjustable panhard bar 204 may be a telescopic panhard bar that can change its length by means of the actuator 220. The actuator 220 may be coupled to the above described processing circuitry 502 and arranged to control the length of the adjustable panhard bar 204 in response to receiving instructions from the processing circuitry 502. According to an example, the actuator 220 may be an electric motor although other alternatives, such as a hydraulic motor or a pneumatic cylinders, are conceivable.

The controllable cab adjustment system 200 also comprises a pivotable connection joint 230. The pivotable connection joint 230 is preferably arranged at a front end of the vehicle cab 100 and connected between the vehicle cab 100 and the chassis 202. In Fig. 2, the pivotable connection joint 230 is exemplified as being positioned at a front left end of the vehicle cab 100, but can of course also be arranged at the front right end. By means of the pivotable connection joint 230, the vehicle cab 100 is rotatably connected to the chassis 202, whereby the vehicle cab 100 can rotate relative to the chassis 202 around a geometric axis 250. The geometric axis 250 preferably extends in a substantial vertical direction of the vehicle 1.

When the actuator 220 controls the adjustable panhard bar 204 to e.g. increase its length, the vehicle cab 100 is rotated around the geometric axis 250 relative to the chassis 202 at the pivotable connection joint 230, which is depicted in further detail in Fig. 3. The elastic connector elements 216, 218 allows a translative motion of the vehicle cab 100 relative to the chassis 202. The vehicle cab 100 can also be rotated relative to the chassis by controlling the actuator 220 to retract the adjustable panhard bar 204, i.e. to reduce the length of the adjustable panhard bar 204.

The controllable cab adjustment system 200 also comprises the above described first 110 and second 110' wind sensors. Reference is now made to Figs. 3 and 4 to describe the computer system and method of controlling the controllable cab adjustment system 200 according to an example.

During propulsion of the vehicle 1, the processing circuitry 502 determines S1 a first wind force value representing a first wind force acting on the first lateral side 112 of the vehicle cab 100. In a similar vein, the processing circuitry determines a second wind force value representing a second wind force acting on the second lateral side 112' of the vehicle cab 100. The first wind force value is preferably sensor data received from the first wind sensor 110, while the second wind force value is preferably sensor data received from the second wind sensor 110'.

The processing circuitry 502 determines S2 a difference between the first and second wind force values. Hereby, the processing circuitry 502 may determine how much yaw wind that acts on the vehicle cab 100. The processing circuitry 502 may also determine a direction of the wind acting on the vehicle cab 100 as described above. The processing circuitry 502 thereafter controls S3 the actuator (220 in Fig. 2) to adjust the length of the adjustable panhard bar 204 in response to the determined difference between the first and second force values. Hereby, the vehicle cab 100 is rotated around the geometric axis 250 at the pivotable connection joint 230. A wind force resistance of the vehicle cab 100 which is caused by the first and second wind forces can be reduced. The vehicle cab 100 in its rotated configuration is depicted in dashed lines 100' in Fig. 3.

The processing circuitry 502 is preferably configured to determine a resulting wind direction 300 acting on the vehicle cab 100. For example, when the wind force acting on the second lateral side 112' of the vehicle cab 100 is higher compared to the wind force acting on the first lateral side 112 of the vehicle cab 100, the processing circuitry 502 may determine that the resulting wind direction 300 acting on the vehicle cab 100 is acting on the second lateral side 112' of the vehicle cab 100, i.e. the wind is primarily acting on the second lateral side 112' of the vehicle cab 100. Preferably, the processing circuitry 502 hereby controls the actuator 220 to adjust the length of the adjustable panhard bar 204 such that the vehicle cab 100 is rotated in a direction towards the resulting wind direction. In the above example, the vehicle cab 100 is preferably rotated such that the front end of the vehicle cab 100 will be rotated towards the resulting wind direction 300.

According to an example, a difference between the first and second force values should preferably exceed a predetermined threshold force value for the processing circuitry 502 to transmit an instruction to the actuator 220 to adjust the length of the adjustable panhard bar 204. As such, the yaw wind acting on the vehicle cab 100 should be of sufficient magnitude, otherwise the vehicle cab 100 may maintain its nominal position relative to the chassis 202. Also, the processing circuitry 502 may be configured to control the actuator 220 to adjust the length of the adjustable panhard bar 204 proportionally to the difference between the first and second force values. In addition, the vehicle 100 may need to be propelled at a vehicle speed above a predetermined threshold speed limit for the processing circuitry 502 to transmit an instruction to the actuator 220 to adjust the length of the adjustable panhard bar 204. At vehicle speeds below the predetermined threshold speed limit, the yaw wind may not cause a sufficient wind force resistance, whereby the vehicle cab 100 may maintain its nominal position relative to the chassis 202 when the vehicle is propelled at relatively low vehicle speed.

Fig. 5 is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include processing circuitry 502 (e.g., processing circuitry including one or more processor devices or control units), a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 502 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

### EXAMPLE LIST

Example 1. A computer system comprising processing circuitry configured to receive sensor data during propulsion of a vehicle, the sensor data comprising a first force value representing a first wind force acting on a first lateral side of a vehicle cab, and a second force value representing a second wind force acting on a second lateral side of the vehicle cab, determine a difference between the first force value and the second force value, and control an actuator to adjust a length of an adjustable panhard bar connected between the vehicle cab and a chassis of the vehicle to rotate the vehicle cab, around a geometric axis of the vehicle, in response to the determined difference between the first and second force values to reduce a wind force resistance of the vehicle cab caused by the first and second wind forces.

Example 2. The computer system of example 1, wherein the processing circuitry is configured to determine a resulting wind direction acting on the vehicle cab, the resulting wind direction being a difference between the first force value acting on the first lateral side of the vehicle cab and the second force value acting on the second lateral side of the vehicle cab, and control the actuator to adjust the length of the adjustable panhard bar such that the vehicle cab is rotated in a direction towards the resulting wind direction.

Example 3. The computer system of any one of examples 1 or 2, wherein the processing circuitry is configured to control the actuator to adjust the length of the adjustable panhard bar proportionally to the difference between the first and second force values.

Example 4. The computer system of any one of the preceding examples, wherein the processing circuitry is configured to control the actuator to adjust the length of the adjustable panhard bar when the difference between the first and second force values exceeds a predetermined threshold force value.

Example 5. The computer system of any one of the preceding examples, wherein the processing circuitry is configured to control the actuator to adjust the length of the adjustable panhard bar when the vehicle is propelled at a vehicle speed above a predetermined threshold speed limit.

Example 6. The computer system of any one of the preceding examples, wherein the sensor data is received from a first wind sensor arranged on the first lateral side of the vehicle cab and from a second wind sensor arranged on the second lateral side of the vehicle cab.

Example 7. The computer system of example 6, wherein the first sensor is arranged on a first vehicle cab extender and the second sensor is arranged on a second vehicle cab extender, the first and second vehicle cab extenders are positioned at a rear end of the vehicle cab at a respective first and second lateral side.

Example 8. A vehicle comprising the computer system of any of examples 1-7.

Example 9. A computer-implemented method, comprising: determining, by processing circuitry of a computer system, a first wind force value representing a first wind force acting on a first lateral side of a vehicle cab, and a second force value representing a second wind force acting on a second lateral side of the vehicle cab, determining, by the processing circuitry, a difference between the first force value and the second force value, and controlling, by the processing circuitry, an actuator to adjust a length of an adjustable panhard bar connected between the vehicle cab and a chassis of the vehicle to rotate the vehicle cab, around a geometric axis of the vehicle, in response to the determined difference between the first and second force values to reduce a wind force resistance of the vehicle cab caused by the first and second wind forces.

Example 10. A controllable cab adjustment system for a vehicle, the controllable cab adjustment system comprising: an adjustable panhard bar connectable between a chassis of the vehicle and a vehicle cab, an actuator connected to the adjustable panhard bar and arranged to controllably adjust a length of the adjustable panhard bar, a first wind sensor and a second wind sensor, a pivotable connection joint configured to rotate the vehicle cab relative to the chassis around a geometric axis of the vehicle, and processing circuitry coupled to the actuator and to the first and second wind sensors, the processing circuitry being configured to: receive sensor data from the first and second wind sensors during propulsion of the vehicle, the sensor data from the first wind sensor comprising a first force value representing a first wind force acting on a first lateral side of the vehicle cab, and the data from the second wind sensor comprising a second force value representing a second wind force acting on a second lateral side of the vehicle cab, determine a difference between the first and second force values, and control the actuator to adjust the length of the panhard bar to rotate the vehicle cab at the pivotable connection joint in response to the determined difference between the first and second force values to reduce a wind force resistance of the vehicle cab caused by the first and second wind forces.

Example 11. The system of example 10, wherein the vehicle cab is suspended to the vehicle frame at a pivotable connection joint allowing the vehicle cab to rotate.

Example 12. The system of example 11, wherein the pivotable connection joint is positioned at a front end of the vehicle cab.

Example 13. The system of any one of examples 10 - 12, wherein the vehicle cab is suspended to the chassis by a pair of elastic connector elements allowing a translative motion of the vehicle cab relative to the chassis.

Example 14. The system of example 13, wherein the pair of elastic connector elements being a pair of air bellows.

Example 15. The system of any one of examples 13 or 14, wherein the pair of elastic connector elements is positioned at a rear end of the vehicle cab.

Example 16. The system of any one of examples 10 - 15, wherein the panhard bar is arranged at a rear end of the vehicle cab.

Example 17. The system of any one of examples 10 - 16, wherein the actuator is an electric motor.

Example 18. A computer program product comprising program code for performing, when executed by the processing circuitry, the method of example 9.

Example 19. A non-transitory computer-readable storage medium comprising instructions, which when executed by the processing circuitry, cause the processing circuitry to perform the method of example 9.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (500) comprising processing circuitry (502) configured to:
- receive sensor data during propulsion of a vehicle (1), the sensor data comprising a first force value representing a first wind force acting on a first lateral side (112) of a vehicle cab (100), and a second force value representing a second wind force acting on a second lateral side (112') of the vehicle cab,
- determine a difference between the first force value and the second force value, and
- control an actuator (220) to adjust a length of an adjustable panhard bar (204) connected between the vehicle cab (100) and a chassis (202) of the vehicle to rotate the vehicle cab, around a geometric axis (250) of the vehicle, in response to the determined difference between the first and second force values, to reduce a wind force resistance of the vehicle cab caused by the first and second wind forces.

2. The computer system of claim 1, wherein the processing circuitry is configured to:
- determine a resulting wind direction acting on the vehicle cab (100), the resulting wind direction being a difference between the first force value acting on the first lateral side (112) of the vehicle cab (100) and the second force value acting on the second lateral side (112') of the vehicle cab (100), and
- control the actuator (220) to adjust the length of the adjustable panhard bar (204) such that the vehicle cab is rotated in a direction towards the resulting wind direction.

3. The computer system of any one of claims 1 or 2, wherein the processing circuitry is configured to control the actuator (220) to adjust the length of the adjustable panhard bar (204) proportionally to the difference between the first and second force values.

4. The computer system of any one of the preceding claims, wherein the processing circuitry is configured to control the actuator (220) to adjust the length of the adjustable panhard bar (204) when the difference between the first and second force values exceeds a predetermined threshold force value.

5. The computer system of any one of the preceding claims, wherein the processing circuitry is configured to control the actuator (220) to adjust the length of the adjustable panhard bar (204) when the vehicle (1) is propelled at a vehicle speed above a predetermined threshold speed limit.

6. The computer system of any one of the preceding claims, wherein the sensor data is received from a first wind sensor (110) arranged on the first lateral side (112) of the vehicle cab and from a second wind sensor (110') arranged on the second lateral side (112') of the vehicle cab.

7. The computer system of claim 6, wherein the first sensor (110) is arranged on a first vehicle cab extender and the second sensor (110') is arranged on a second vehicle cab extender, the first and second vehicle cab extenders are positioned at a rear end of the vehicle cab at a respective first and second lateral side.

8. A vehicle comprising the computer system of any of claims 1-7.

9. A computer-implemented method, comprising:
- determining (S 1), by processing circuitry of a computer system, a first wind force value representing a first wind force acting on a first lateral side (112) of a vehicle cab (100), and a second force value representing a second wind force acting on a second lateral side (112') of the vehicle cab (100),
- determining (S2), by the processing circuitry, a difference between the first force value and the second force value, and
- controlling (S3), by the processing circuitry, an actuator (220) to adjust a length of an adjustable panhard bar (204) connected between the vehicle cab (100) and a chassis (202) of the vehicle (1) to rotate the vehicle cab, around a geometric axis (250) of the vehicle, in response to the determined difference between the first and second force values to reduce a wind force resistance of the vehicle cab caused by the first and second wind forces.

10. A controllable cab adjustment system (200) for a vehicle (1), the controllable cab adjustment system comprising:
- an adjustable panhard bar (204) connectable between a chassis (202) of the vehicle and a vehicle cab (100),
- an actuator (220) connected to the adjustable panhard bar (204) and arranged to controllably adjust a length of the adjustable panhard bar (204),
- a first wind sensor (110) and a second wind sensor (110'),
- a pivotable connection joint (230) configured to rotate the vehicle cab relative to the chassis around a geometric axis (250) of the vehicle, and
- processing circuitry (502) coupled to the actuator (220) and to the first (110) and second (110') wind sensors, the processing circuitry being configured to:
- receive sensor data from the first (110) and second (110') wind sensors during propulsion of the vehicle (1), the sensor data from the first wind sensor (110) comprising a first force value representing a first wind force acting on a first lateral side (112) of the vehicle cab (100), and the sensor data from the second wind sensor (110') comprising a second force value representing a second wind force acting on a second lateral side (112') of the vehicle cab (100),
- determine a difference between the first and second force values, and
- control the actuator (220) to adjust the length of the panhard bar (204) to rotate the vehicle cab (100) at the pivotable connection joint (230) in response to the determined difference between the first and second force values to reduce a wind force resistance of the vehicle cab caused by the first and second wind forces.

11. The system of claim 10, wherein the vehicle cab (100) is suspended to the vehicle frame (202) at the pivotable connection joint (230) allowing the vehicle cab (100) to rotate.

12. The system of any one of claims 10 or 11, wherein the vehicle cab (100) is suspended to the chassis (202) by a pair of elastic connector elements (216, 218) allowing a translative motion of the vehicle cab (100) relative to the chassis (202).

13. The system of any one of claims 10 - 12, wherein the panhard bar (204) is arranged at a rear end of the vehicle cab (100).

14. A computer program product comprising program code for performing, when executed by the processing circuitry, the method of claim 9.

15. A non-transitory computer-readable storage medium comprising instructions, which when executed by the processing circuitry, cause the processing circuitry to perform the method of claim 9.
